# EUROPEAN PATENT SPECIFICATION

(11) **EP 3 789 258 B1**
(45) Date of publication and mention of the grant of the patent: **16.08.2023**
(21) Application number: 19195542.6
(22) Date of filing: 05.09.2019
(51) Int. Cl.: B60T 13/38, B60T 17/08, F16D 65/28

(54) **BRAKE DEVICE AND RAILWAY VEHICLE**
BREMSVORRICHTUNG UND SCHIENENFAHRZEUG
DISPOSITIF DE FREIN ET VÉHICULE FERROVIAIRE

(43) Date of publication of application: 10.03.2021
(73) Proprietor: Nabtesco Corporation, Tokyo 102-0093 (JP)
(72) Inventor: ASANO, Yoshio, Kobe-shi, Hyogo 651-2271 (JP); OIE, Hideyuki, Kobe, Hyogo 651-2271 (JP)
(74) Representative: Grünecker Patent- und Rechtsanwälte PartG mbB

(56) References cited:
- WO-A1-2014/042031
- WO-A1-2014/162960
- US-A1- 2015 090 064

## Description

### TECHNICAL FIELD

The present invention relates to a brake device and a railway vehicle.

### BACKGROUND

A brake device that applies a braking force to a wheel by forcing a brake shoe against a tread of the wheel of a railway vehicle has been known (see, for example, Patent Document 1). The brake device described in Patent Document 1 includes a hydrodynamic brake mechanism that generates a braking force utilizing a fluid and a spring brake mechanism that generates a braking force utilizing a spring. The brake device also includes a manual brake release device for releasing the brake force of the spring brake mechanism by manual operation.

In the manual brake release device, a latch member protruding from a cylinder body is connected to an operation member via a cable. When the operation member is pulled to operate the device, the latch member is pulled out of the cylinder body and the braking force of the spring brake mechanism is released.

### RELEVANT REFERENCES

### LIST OF RELEVANT PATENT LITERATURE

Patent Literature 1: International Publication No. WO 2014/42031

### SUMMARY

Such brake devices are installed near wheels. When a worker working on one side of a railway vehicle tries to manually release the spring brake mechanism on the other side, the worker has to go around the railway vehicle to reach the opposite side, which reduces the working efficiency, and this needs to be improved. A similar problem may occur not only in the brake device that generates a braking force by contacting the tread surface of the wheel, but also in other brake devices such as a caliper brake or a rail brake.

The present invention has been made in view of the above, and an object thereof is to provide a brake device and a railway vehicle in which the work efficiency of manually releasing a braking force of a spring brake mechanism is improved.

Said object is achieved by a brake device according to claim 1. Preferred embodiments are laid down in the dependent claims. According one aspect of the invention provided is a brake device. The brake device includes a spring brake mechanism that generates a braking force by pressing a brake friction member against a pressed member by a spring force, and a release unit that releases the braking force by preventing transmission of the spring force to the brake friction member. Two or more release units are provided for the spring brake mechanism.

In the above configuration, the two or more release units of the manual brake release device are provided for the spring brake mechanism, and the braking force can be released by operating these release units. Since the release unit is installed on each side of the railway vehicle, there is no need for a worker to go around the railway vehicle to go to the opposite side when the worker on one side of the railway vehicle tries to manually release the spring brake mechanism on the other side, resulting in improvement of the work efficiency.

In the above brake device, the two or more release units may each include one cable member. In this configuration, the two or more release units disposed on each side of the railway vehicle can be operated by the two cable members. Therefore it is possible for a worker to perform the braking force releasing operation without actually approaching the spring brake mechanism since the cable units are extended and connected to the position where the worker operates, which also improves the work efficiency.

In the brake device, each release unit includes a lever member disposed between the cable member and the spring brake mechanism. The lever member includes a fulcrum portion by which the lever member is supported pivotably about a rotation shaft, an effort portion coupled to the cable member, and a load portion coupled to the spring brake mechanism.

In this configuration, the lever member is provided between the cable member and the spring brake mechanism. The effort portion of the lever member is coupled to the cable member. The load portion of the lever member is coupled to the spring brake mechanism. The fulcrum portion of the lever member is supported by the rotation shaft. Thus only a single member is necessary to provide to support the lever members.

In the brake device, the lever member may be a rod shaped member having a point of load, and two ends of the rod shaped member are coupled to two cable members respectively. In this configuration, the rod shaped member rotates about the fulcrum portion to drive the load portion when the cable member is operated.

In the brake device, the distance between the fulcrum portion and the effort portion in each release unit may be longer than the distance between the fulcrum portion and the load portion. Since the distance between the fulcrum portion and the effort portion is longer than the distance between the fulcrum portion and the load portion, it is possible to reduce the amount of operational force relative to the amount of force necessary to act on the load.

According to another aspect of the invention, provided is a railway vehicle including the above brake device. In the railway vehicle, a release unit is provided on each side of the railway vehicle. In this configuration, it is possible to release the braking force by operating the release units provided on the both sides of the railway vehicle. Thus there is no need for a worker to go around the railway vehicle to go to the opposite side when the worker on one side of the railway vehicle tries to manually release the spring brake mechanism on the other side, resulting in improvement of the work efficiency.

According to another aspect of the invention, provided is a railway vehicle including the above brake device. In the railway vehicle, the cable member of each release unit is disposed over a bogie of the railway vehicle. In the above configuration, the two or more release units of the manual brake release device are provided for the spring brake mechanism, and the braking force can be released by operating these release units. Since the release unit is installed on each side of the railway vehicle, there is no need for a worker to go around the railway vehicle to go to the opposite side when the worker on one side of the railway vehicle tries to manually release the spring brake mechanism on the other side, resulting in improvement of the work efficiency. Moreover, since the cable members pass over the bogie, it is possible to reduce the amount of foreign substances adhering to the cable members while the railway vehicle is traveling.

According to the aspects of the invention, it is possible to improve the work efficiency when manually releasing the braking force of the spring brake mechanism.

### BRIEF DESCRIPTION OF THE DRAWINGS

Fig. 1 is a plan view of a first embodiment of a brake device.
Fig. 2 is a sectional view of the brake device according to the first embodiment.
Fig. 3 is a sectional view of a brake cylinder device.
Fig. 4 is a front view of a manual brake release device according to the first embodiment.
Fig. 5 is a side view of the manual brake release device according to the first embodiment.
Fig. 6a is a front view of the manual brake release device according to the first embodiment.
Fig. 6b is a front view of the manual brake release device according to the first embodiment.
Fig. 7a is a side view of a connecting section of the manual brake release device according to a second embodiment.
Fig. 7b is a front view of the connecting section of the manual brake release device according to the second embodiment.
Fig. 8 is a side view of the connecting section of the manual brake release device according to the second embodiment.
Fig. 9 is a side view of the connecting section of the manual brake release device according to a third embodiment.
Fig. 10 is a front view of the connecting section of the manual brake release device according to the third embodiment.
Fig. 11a is a side view of the connecting section of the manual brake release device according to the third embodiment.
Fig. 11b is a side view of the connecting section of the manual brake release device according to the third embodiment.
Fig. 12a is a front view of the connecting section of the manual brake release device according to the third embodiment.
Fig. 12b is a side view of the connecting section of the manual brake release device according to the third embodiment.
Fig. 13 is a side view of the connecting section of the manual brake release device according to a fourth embodiment.
Fig. 14a is a side view of the connecting section of the manual brake release device according to the fourth embodiment.
Fig. 14b is a side view of the connecting section of the manual brake release device according to the fourth embodiment.
Fig. 15 is a side view of the connecting section of the manual brake release device according to a fifth embodiment.
Fig. 16a is a sectional view of the connecting section of the manual brake release device according to the fifth embodiment.
Fig. 16b is a side view of the connecting section of the manual brake release device according to the fifth embodiment.
Fig. 17 is a side view of the connecting section of the manual brake release device according to a sixth embodiment.
Fig. 18a is a sectional view of the connecting section of the manual brake release device according to the sixth embodiment.
Fig. 18b is a side view of the connecting section of the manual brake release device according to the sixth embodiment.

### DESCRIPTION OF THE EMBODIMENTS

### First Embodiment

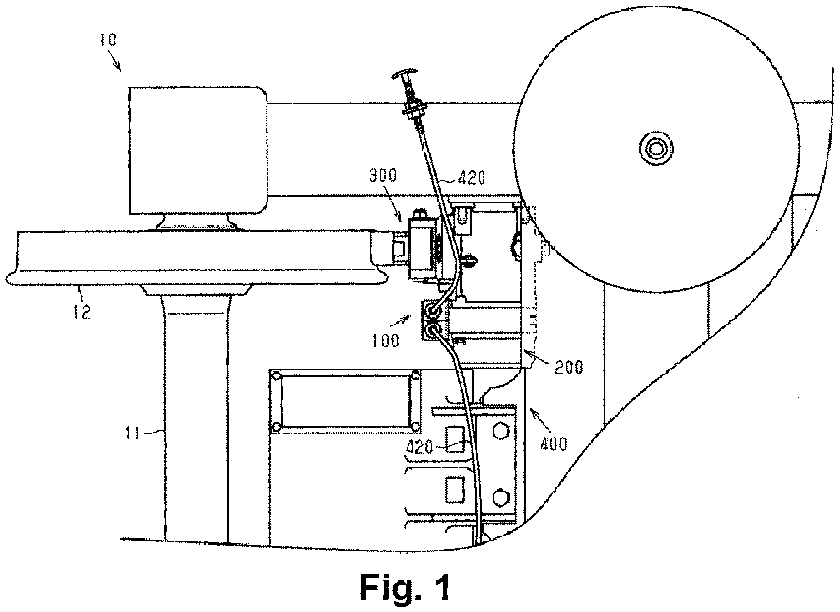

With reference to Figs. 1 to 6, a first embodiment of a brake device will be now described. Referring to Fig. 1, a brake device 100 is a device that applies a braking force to a wheel 12 provided at an end of an axle 11 of a railway vehicle 10. The brake device 100 includes a brake cylinder device 200, a brake output section 300, and two manual brake release devices 400 as release units. The manual brake release devices 400 each include one cable member 420 extending toward the two ends of the axle 11 respectively in the axial direction of the axle. The cable members 420 are disposed over a bogie.

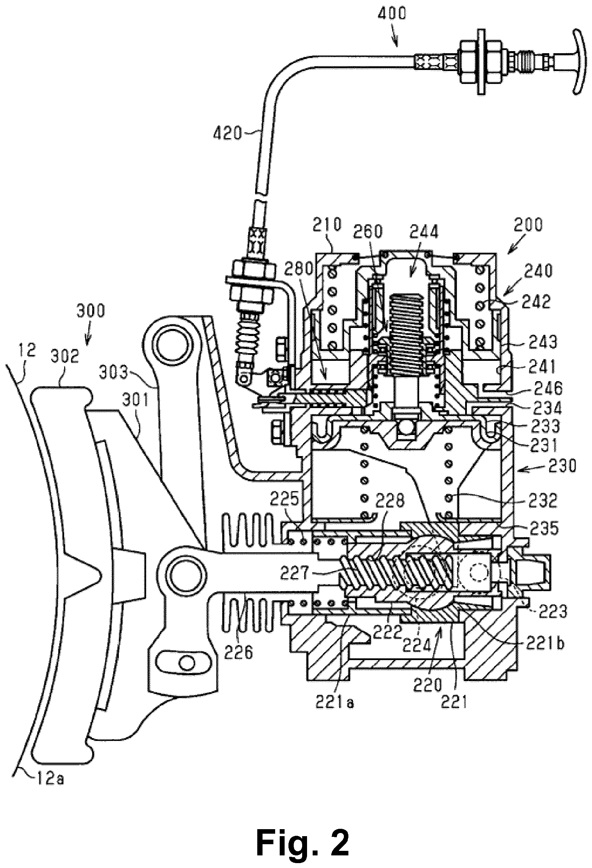

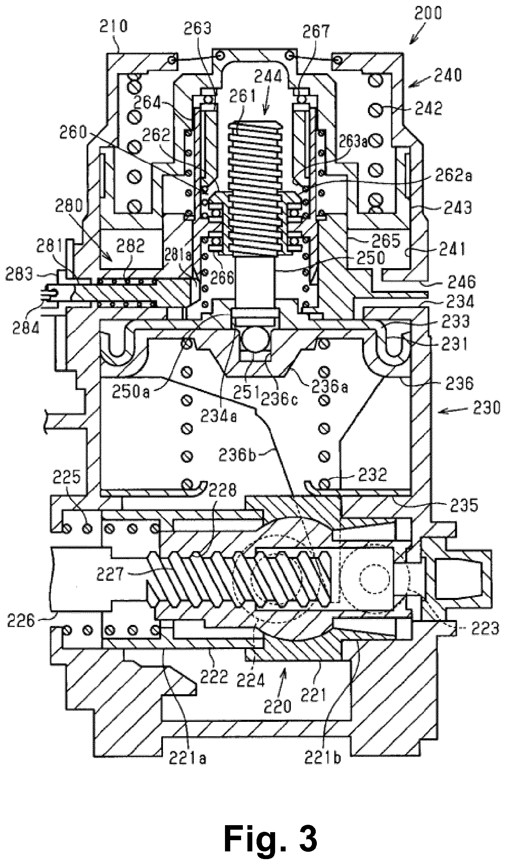

Referring to Figs. 2 and 3, the brake cylinder device 200 includes a cylinder body 210, a rod support mechanism 220, a hydrodynamic brake mechanism 230, a spring brake mechanism 240, and a lock mechanism 280. The brake cylinder device 200 is configured such that the hydrodynamic brake mechanism 230 and the spring brake mechanism 240 therein are operated by supplying and exhausting compressed air as a pressure fluid.

The cylinder body 210 is formed in a cylindrical shape, and is fixed to the bogie of the railway vehicle 10. The rod support mechanism 220, the hydrodynamic brake mechanism 230, the spring brake mechanism 240, and the lock mechanism 280 are accommodated in the cylinder body 210.

The rod support mechanism 220 includes an outer case section 221, an inner case section 222, a fixed roller 223, a movable roller 224, and a return spring 225. The outer case section 221 includes two case units 221a and 221b. The case units 221a, 221b each have a cylindrical shape and are arranged in series in an axial direction of a rod 226. The case units 221a, 221b are supported such that they are movable along the axial direction of the rod 226 relative to the cylinder body 210.

The inner case section 222 is housed in the outer case section 221. A screw hole 228 into which a threaded portion 227 formed on an outer circumferential surface of the rod 226 is engaged is provided in an inner circumferential surface of the inner case section 222. The position of the rod relative to the inner case section 222 is changeable by displacing the engagement position of the threaded portion 227 with the screw hole 228.

The fixed roller 223 is supported rotatably relative to the cylinder body 210. The movable roller 224 is supported rotatably relative to the outer case section 221. The rollers 223 and 224 are spaced apart from each other in the axial direction of the rod 226.

The return spring 225 is disposed inside the cylinder body 210 in a compressed manner. A first end of the return spring 225 contacts an inner wall of the cylinder body 210, and a second end of the return spring 225 contacts a front end of the outer case section 221. The return spring 225 biases the inner case section 222 and the rod 226 screwed therein, together with the outer case section 221, such that they are retracted inside the cylinder body 210.

The hydrodynamic brake mechanism 230 includes a first pressure chamber 231, a first spring 232, and a first piston 233. The hydrodynamic brake mechanism 230 is operated by supplying and exhausting compressed air as a fluid, and is used for brake operation when the railway vehicle 10 runs.

The first pressure chamber 231 is defined by the first piston 233 inside the cylinder body 210. The first pressure chamber 231 communicates with a first port 234 provided in the cylinder body 210. The first port 234 is coupled to a first compressed air supply (not shown). The compressed air from the first compressed air supply is supplied to the first port 234 via a brake control device (not shown) that operates in accordance with commands from a host controller (not shown). The compressed air supplied from the first port 234 to the first pressure chamber 231 of the cylinder body 210 is exhausted through the first port 234 via the brake control device in accordance with a command from the controller.

The first spring 232 is disposed in a region defined by the first piston 233 inside the cylinder body 210 and is disposed so as to face the first pressure chamber 231 with the first piston 233 interposed therebetween. The first spring 232 is disposed inside the cylinder body 210 in a compressed state. A first end of the first spring 232 abuts on the first piston 233 and biases the first piston 233. Further, a second end of the first spring 232 abuts and is supported by a spring receiving plate 235 fixed to the inner wall of the cylinder body 210.

The first piston 233 is disposed such that it is capable of reciprocating inside the cylinder body 210. The first end of the first piston 233 is pushed by the compressed air supplied from the first port 234 to the first pressure chamber 231. When the compressed air is supplied to the first pressure chamber 231, the first piston 233 moves in a brake application direction (downward in Figs. 2 and 3) against the biasing force of the first spring 232.

As shown in Fig. 3, a base end portion 236a of a rod drive section 236 is fixed to the second end portion of the first piston 233. A wedge portion 236b having a tapered shape is formed in a tip portion of the rod drive section 236. The wedge portion 236b of the rod drive section 236 is inserted between the fixed roller 223 and the movable roller 224. When the first piston 233 moves in the brake application direction, the rod drive section 236 moves in the brake application direction together with the first piston 233. Further, when the rod drive section 236 moves in the brake application direction, the wedge portion 236b of the rod drive section 236 forces the movable roller 224 to move away from the fixed roller 223. When the movable roller 224 moves away from the fixed roller 223, the rod 226 moves toward the wheel 12. Consequently, a brake shoe 302 that serves as a brake friction member held by a brake shoe head 301 connected to the tip of the rod 226 comes into contact with a tread 12a of the wheel 12 of the railway vehicle 10, which is a pressed member, to apply a braking force thereto.

The spring brake mechanism 240 includes a second pressure chamber 241, a second spring 242, a second piston 243, a shaft 244, and a transmission mechanism 260. In the spring brake mechanism 240, a braking force is generated by the second spring 242 and the spring brake mechanism 240 is used to maintain the railway vehicle 10 in a parking state.

The second pressure chamber 241 is defined by the second piston 243 inside the cylinder body 210. The second pressure chamber 241 communicates with a second port 246 provided in the cylinder body 210. The second port 246 is coupled to a second compressed air supply (not shown). The compressed air from the second compressed air supply is supplied to the second port 246 via the brake control device (not shown) that operates in accordance with commands from the controller (not shown). The compressed air supplied from the second port 246 to the second pressure chamber 241 of the cylinder body 210 is exhausted through the second port 246 via the brake control device in accordance with a command from the controller.

The second spring 242 is disposed in a region defined by the second piston 243 inside the cylinder body 210 and is disposed so as to face the second pressure chamber 241 via the second piston 243. The second spring 242 is disposed inside the cylinder body 210 in a compressed state. A first end of the second spring 242 abuts and is supported by an inner wall of the end portion of the cylinder body 210. A second end of the second spring 242 abuts on the second piston 243 and biases the second piston 243.

The second piston 243 is disposed such that it is capable of reciprocating inside the cylinder body 210. The first end of the second piston 243 is pushed by the compressed air supplied from the second port 246 to the second pressure chamber 241. When the compressed air is supplied to the second pressure chamber 241, the second piston 233 moves in a direction opposite to the brake application direction (upward in Figs. 2 and 3) against the biasing force of the second spring 242. Whereas when the compressed air supplied to the second pressure chamber 241 is exhausted therefrom through the second port 246, the second piston 233 moves in the brake application direction (downward in Figs. 2 and 3) by the biasing force of the second spring 242.

Thus, in the spring brake mechanism 240, the second piston 243 is configured to move in the brake application direction by the biasing force of the second spring when the compressed air supplied to the second pressure chamber 241 is exhausted from the second pressure chamber.

The shaft 244 includes a spindle 250 and a bearing 251. The shaft 244 is connected to the first piston 233 at the end of the spindle 250 and is displaced together with the first piston 233.

The spindle 250 is a shaft-like member formed separately from the first piston 233, and protrudes in a brake release direction as viewed from the first piston 233. The spindle 250 transmits, to the first piston 233, the biasing force of the second spring 242 via the second piston 243 together with the transmission mechanism 260 which will be described later.

An annular convex portion 250a is provided at a first end portion of the spindle 250 that is connected to the first piston 233. A concave portion 234a is provided in a radially central portion of the first piston 233. When the first piston 233 is moved in the brake application direction, the concave portion 234a of the first piston 233 is engaged with the convex portion 250a of the spindle spindle 250 to bias the spindle 250 in the brake application direction.

The bearing 251 is provided as, for example, a spherical member, and receives a thrust load that acts on the spindle 250 by the biasing force of the second spring 242 via the second piston 243. The bearing 251 is disposed in a recess 236c formed in the base end portion 236a of the rod drive section 236, and is interposed between the first end of the spindle 250 and the base end portion 236a of the rod drive section 236.

The transmission mechanism 260 is a meshing clutch mechanism and transmits the biasing force of the second piston 243 in the brake application direction to the shaft 244 that is displaced together with the first piston 233. The transmission mechanism 260 includes a threaded portion 261, a clutch wheel 262, a clutch sleeve 263, and a clutch box 264. A cylindrical portion 265 is provided in a radially inward portion of the second piston 243. The transmission mechanism 260 is disposed inside the cylindrical portion 265.

The threaded portion 261 is a male thread formed on the outer circumferential surface of the spindle 250, and is disposed closer to a second end of the spindle 250 opposite to the first end connected to the first piston 233.

The clutch wheel 262 is a cylindrical nut engaged with the threaded portion 261, and is disposed concentrically with the spindle 250. A female screw portion that is screwed into the threaded portion 261 is provided on the inner circumferential surface of the clutch wheel 262. The clutch wheel 262 is disposed inside the cylindrical clutch box 264, and is rotatably supported by the clutch box 264 via the bearing 266 while its displacement relative to the clutch box in the axial direction of the shaft 244 is restricted. Thus the clutch wheel 262 is movable relative to the spindle 250 in the axial direction while changing its engaging position with the threaded portion 261.

The clutch sleeve 263 is a cylindrical member and is disposed inside the clutch box 264. The clutch sleeve 263 is supported by the clutch box 264 such that it is movable along a direction parallel to the axial direction of the spindle 250. A first end of the clutch sleeve 263 situated at the forefront in a clutch engagement direction is disposed to face a first end of the clutch wheel 262 situated on a front side of the brake release direction.

A rotation stop mechanism is provided between the first end of the clutch sleeve 263 and the first end of the clutch wheel 262. The rotation stop mechanism consists of a concave-convex teeth 263a provided at the first end of the clutch sleeve 263 and a concave-convex teeth 262a provided at the first end of the clutch wheel 262.

When the second piston 243 moves in the brake application direction to move relative to the spindle 250, the clutch sleeve 263 also moves relative to the spindle 250 together with the second piston 243. Further, when the clutch sleeve 263 comes into contact with the clutch wheel 262, the concave-convex teeth 262a of the clutch wheel 262 and the concave-convex teeth 263a of the clutch sleeve 263 mesh with each other, so that the relative rotation between the clutch sleeve 263 and the clutch wheel 262 is prevented.

A second end of the clutch sleeve 263 situated at the forefront in a clutch disengagement direction is supported by the end portion of the second piston 243 via a bearing 267. The bearing 267 supports the second end of the clutch sleeve 263 such that the second end of the clutch sleeve 263 is rotatable about the central axis of the spindle 250 relative to the second piston 243, and the biasing force of the second piston 243 is transmitted to the clutch sleeve 263.

The clutch box 264 is a cylindrical member, and houses the threaded portion 261, the clutch wheel 262, and the clutch sleeve 263. The clutch box 264 is disposed between the cylindrical portion 265 of the cylinder body 210 and the second piston 243 inside the cylinder body 210. The clutch box 264 is supported by the cylindrical portion 265 and the second piston 243 such that it is slidable in a direction parallel to the axial direction of the spindle 250. Further, the clutch box 264 is also slidable along the circumferential direction of the cylinder body 210 with respect to the cylindrical portion 265 of the cylinder body 210 and the second piston 243 when a latch member 281, which will be described later, is not engaged in the lock mechanism 280. Note that the latch member 281 corresponds to a release member.

The lock mechanism 280 is a mechanism that locks the spring brake mechanism 240. When the locked state of the spring brake mechanism 240 is released, the braking force of the spring brake mechanism 240 is released. The lock mechanism 280 includes the latch member 281 and a latch biasing spring 282.

The latch member 281 is disposed in a region that separates the first pressure chamber 231 from the second pressure chamber 241 inside the cylinder body 210. The latch member 281 has a rod shape and is disposed to extend along the radial direction of the cylinder body 210. Further, a first end of the latch member 281 protrudes out from the cylinder body 210. A cover member 283 that fills the gap between the first end of the latch member 281 and the cylinder body 210 prevents the latch member 281 from falling from the cylinder body 210. Further, the second end of the latch member 281 has a stepped portion that is wider than the other portions of the latch member 281.

The latch biasing spring 282 is disposed between the second end of the latch member 281 and the cover member 283 and biases the latch member 281 toward the inside of the cylinder body 210. A latch blade 281a is formed on a tip end surface of the second end portion of the latch member 281. The latch blade 281a engages with the clutch box 264 of the transmission mechanism 260 due to the biasing force of the latch biasing spring 282. This restricts displacement of the shaft 244 relative to the second piston 243 during brake application of the spring brake mechanism 240, and the braking force of the spring brake mechanism 240 is maintained.

As shown in Fig. 2, the brake output section 300 includes the brake shoe head 301 and the brake shoe 302. The brake shoe head 301 is a member that holds the brake shoe 302 and is swingably supported at the front end portion of the rod 226. The brake shoe head 301 is also supported swingably relative to a hanger member 303 that is swingably connected to the cylinder body 210. A front surface of the brake shoe 302 facing away from the brake shoe head 301 serves as a brake surface that is contactable with the tread 12a of the wheel 12 of the railway vehicle 10.

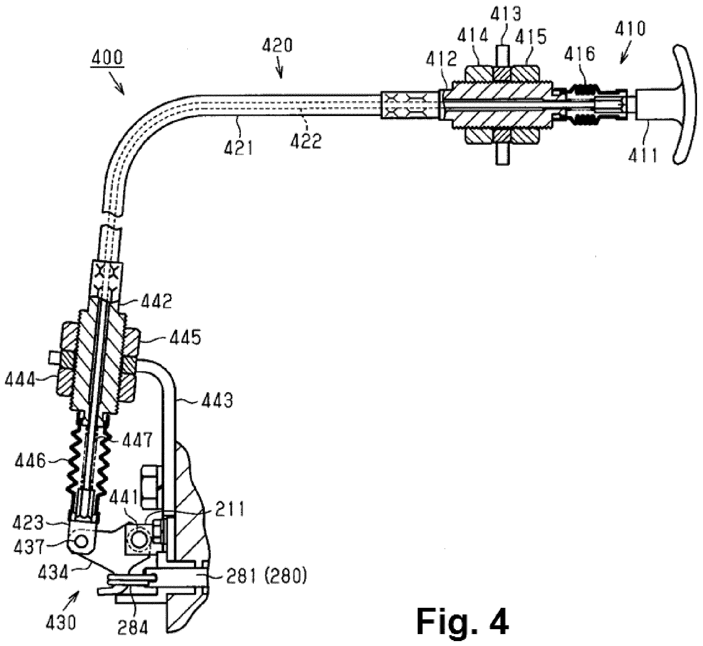

Next, a description is given of the manual brake release device 400. As shown in Fig. 4, the manual brake release device 400 is a device that controls the lock mechanism 280 (latch member 281) by manual operation. The manual brake release device 400 can unlock the spring brake mechanism 240 locked by the lock mechanism 280 to release the braking force of the spring brake mechanism 240. The manual brake release device 400 includes an operation member 410, the cable member 420, and a connecting section 430. The operation member 410 is connected to a first end of the cable member 420. The connecting section 430 is connected to a second end of the cable portion 420.

The cable member 420 includes a tubular outer cable 421 and an inner cable 422 that is inserted into the outer cable 421. The inner cable 422 is longer than the outer cable 421 and protrudes from each end of the outer cable 421.

A first attachment member 412 is connected to a first end of the outer cable 421. A male threaded portion is formed on an outer circumferential surface of the first attachment member 412. An operation-side bracket 413 that fixes the cable member 420 is attached to the first attachment portion 412. The operation-side bracket 413 is attached around the first attachment portion 412. Two nuts 414 and 415 are fastened to the first attachment member 412, and the operation-side bracket 413 is disposed between the two nuts 414 and 415.

The operation member 410 is connected to a first end of the inner cable 422. The operation member 410 includes a grip 411 that is gripped when the manual brake release device 400 is operated. A portion of the first end portion of the inner cable 422 that protrudes from the outer cable 421 is covered with a first bellows-shaped extendable portion 416. When the operation member 410 is pulled, the amount of protrusion of the inner cable 422 on the first end side is increased, which extends the first extendable portion 416. Whereas when the operation member 410 is not pulled anymore, the amount of protrusion of the inner cable 422 on the first end side is reduced so that the first extendable portion 416 contracts.

A second attachment member 442 is connected to a second end of the outer cable 421. A male threaded portion is formed on an outer circumferential surface of the second attachment member 442. A connection-side bracket 443 that fixes the cable member 420 is attached to the second attachment portion 442. The connection-side bracket 443 is attached around the second attachment portion 442. Two nuts 444 and 445 are fastened to the second attachment member 442, and the connection-side bracket 443 is disposed between the two nuts 444 and 445.

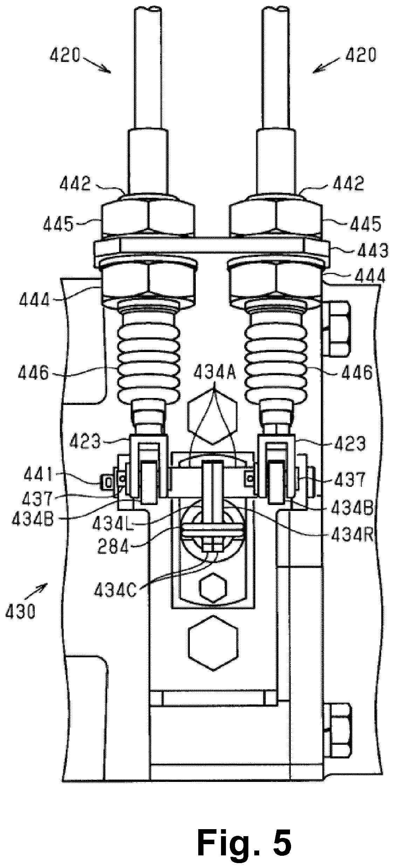

More specifically, as shown in Fig. 5, two through holes (not shown) penetrating in the thickness direction are formed in the connection-side bracket 443. The two cable members 420 of the manual brake release device 400 penetrate through the corresponding through holes of the connection-side bracket 443.

As shown in Fig. 4, a U-shaped connecting member 423 is fixed to a second end of the inner cable 422. A biasing spring 447 is attached around the inner cable 422 between the second attachment member 442 and the connecting member 423. The biasing spring is covered by a second bellows-shaped extendable portion 446. The biasing spring 447 biases the second attachment member 442 and the connecting member 423 in a direction in which they are separated from each other and thereby the second extendable portion 446 extends. When the operation member 410 is pulled, the amount of protrusion of the inner cable 422 on the second end side is decreased, which contracts the second extendable portion 446. Whereas when the operation member 410 is not pulled anymore, the amount of protrusion of the inner cable 422 on the second end side is increased so that the second extendable portion 446 extends.

The connecting section 430 is connected to the connecting member 423 provided at the second end portion of the inner cable 422. The connecting section 430 includes a lever member 434. The lever member 434 is attached to a support portion 211 provided on the cylinder body 210 with a rotation shaft 441 such that it is pivotable about the rotation shaft 441. A ring member 284 is attached to the latch member 281. The lever member 434 is hooked on the ring member 284 and connected to the latch member 281 of the lock mechanism 280 via the ring member 284. That is, the two cable members 420 of the manual brake release device 400 are provided for the lock mechanism 280.

The lever member 434 is provided for each cable member 420. In other words, a left lever member 434L and a right lever member 434R are hooked on the ring member 284. The left lever member 434L and the right lever member 434R have axisymmetrical shapes with respect to each other.

The lever member 434 includes a cylindrical shaft portion 434A that is attached around the rotation shaft 441. The lever member 434 has a first extending portion 434B extended from one end of the shaft portion 434A situated closer to the support portion 211 and is coupled to the connecting member 423, and a second extending portion 434C extended from the other end of the shaft portion 434A and is coupled to the ring member 284.

The U-shaped connecting member 423 is coupled to a tip end of the first extending portion 434B of the lever member 434. The connecting member 423 and the lever member 434 can be coupled by sandwiching the first extending portion 434B of the lever member 434 with the U-shaped portion of the connecting member 423 and inserting a pin 437 therethrough. The tip end of the first extending portion 434B of the lever member 434 corresponds to an effort portion.

As shown in Fig. 4, the lever member 434 is integrally formed to have fulcrum, load and effort portions. The fulcrum portion of the lever member 434 is the shaft portion 434A attached around the rotation shaft 441 that is fixed to the support portion 211 of the cylinder body 210. The lever member 434 is supported pivotably about the rotation shaft 441 by the support portion 211 using the fulcrum portion of the lever member 434 as fulcrum.

The effort portion of the lever member 434 is the end portion of the first extending portion 434B coupled to the connecting member 423 via the pin 437. When the operation member 410 provided at the first end of the cable member 420 is operated, the operation force input through the operation member 410 is transmitted to the effort portion of the lever member 434 through the cable member 420.

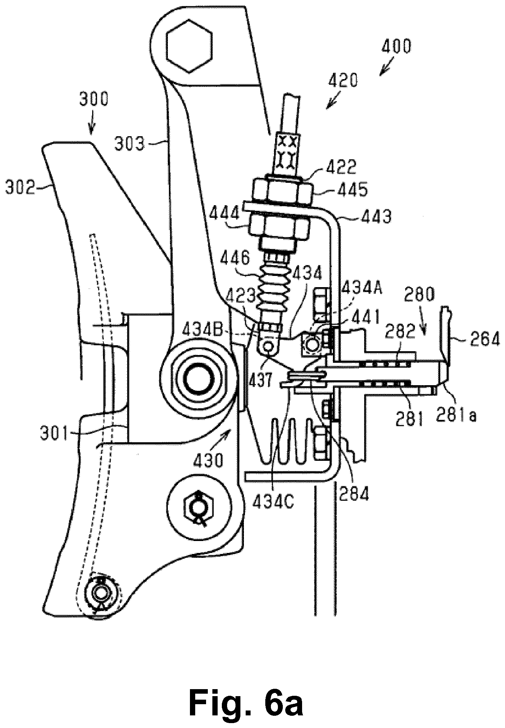

The load portion of the lever member 434 is an end portion of the second extending portion 434C coupled to the ring member 284 of the latch member 281. As shown in Fig. 6a, at the initial state of the manual brake release device 400, the load portion of the lever member 434 is pulled by the latch member 281 that is biased toward the inside of the cylinder body 210 via the ring member 284. Accordingly, the lever member 434 is biased such that the load portion of the lever member 434 is drawn into the cylinder body 210 with the fulcrum portion of the lever member 434 as the center.

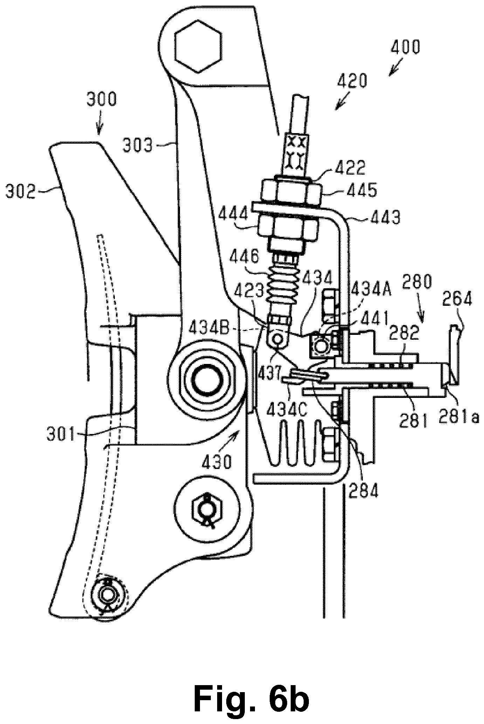

Here, as shown in Fig. 6b, the operation force input through the operation member 410 is transmitted to the end portion of the first extending portion 434B, which is the effort portion of the lever member 434, through the cable member 420. At this time, the lever member 434 rotates the end of the second extending portion 434C, which is the load portion of the lever member 434, in the direction away from the rotation shaft 441, about the shaft portion 434A that is the fulcrum portion of the lever member 434. The rotational force of the lever member 434 is then transmitted from the end of the second extending portion 434C, which is the load portion of the lever member 434, to the latch member 281 via the ring member 284.

As described above, the latch member 281 is pulled out from the cylinder body 210 toward the outside, whereby the latch blade 281a provided on the tip end surface of the latch member 281 is separated from the clutch box 264 of the transmission mechanism 260. This allows displacement of the shaft portion 244 relative to the second piston 243 during the application of the spring brake mechanism 240, and the braking force of the spring brake mechanism 240 is released.

As described above, according to the first embodiment, the following advantageous effects can be obtained. (1) The two or more cable members 420 of the manual brake release device 400 are provided for the spring brake mechanism 240, and the braking force can be released by operating these cable members 420. Since the cable member 420 is installed on each side of the railway vehicle 10, there is no need for a worker to go around the railway vehicle 10 to go to the opposite side when the worker on one side of the railway vehicle 10 tries to manually release the spring brake mechanism 240 on the other side, which improves the work efficiency.

(2) The manual brake release device 400 are operated by the two cable members 420. Therefore it is possible for a worker to perform the braking force releasing operation without actually approaching the spring brake mechanism 240 since the cable members 420 are extended and connected to the position where the worker operates, which also improves the work efficiency.

(3) The lever member is 434 provided between the cable member 420 and the spring brake mechanism 240. The first extending portion 434B, which serves as the effort portion of the lever member 434, is coupled to the cable member. The second extending portion 434C, which serves as the load portion of the lever member 434, is coupled to the latch member 281 of the spring brake mechanism 240, and the shaft portion 434A serving as the fulcrum portion of the lever member 434 is supported by the rotation shaft 441. Thus only a single member is used to support the two or more lever members 434.

(4) Since the cable members 420 pass over the bogie, it is possible to reduce the amount of foreign substances adhering to the cable members 420 while the railway vehicle 10 is traveling.

### Second Embodiment

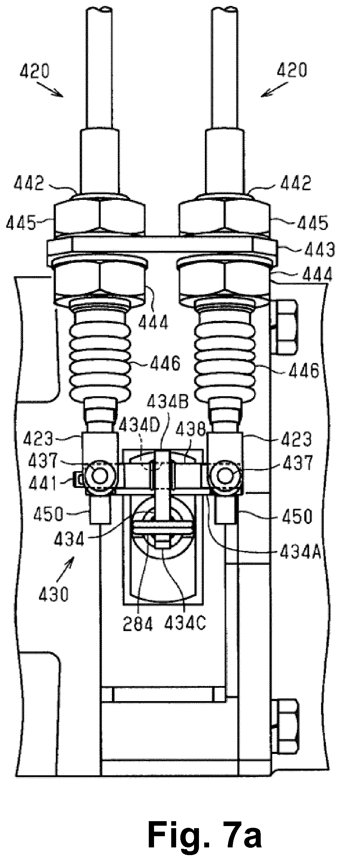

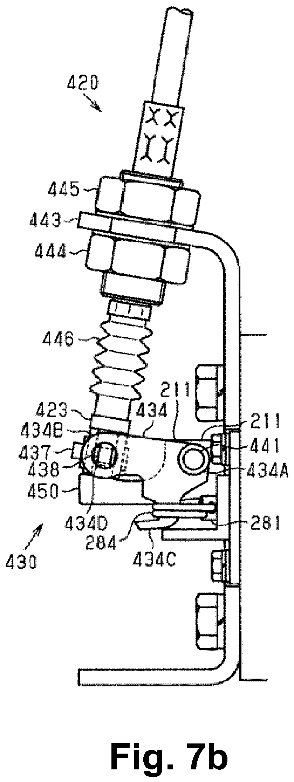

With reference to Figs. 7 to 8, a second embodiment of the brake device will be now described. The second embodiment has the connecting section of the manual brake release device whose configuration is different from the first embodiment. In the following description, the configuration different from the first embodiment will be mainly described, and the description of the same or similar components as the first embodiment will be omitted.

As shown in Figs. 7a and 7b, the U-shaped connecting member 423 is fixed to the second end of each of the two inner cables 422. The connecting member 423 is connected to an end of a rod-shaped balance bar 438. At each end of the balance bar 438, a hole for coupling the connecting member 423 is provided. Each connecting member 423 can be coupled by pinching the end of the balance bar 438 with its U-shaped portion and inserting the pin 437. The connecting member 423 contacts a contact portion 450 provided on the connection-side bracket 443.

The balance bar 438 is interlinked with the lever member 434 through which the balance bar 438 penetrates. The lever member 434 is provided with a through hole 434D through which the balance bar 438 penetrates.

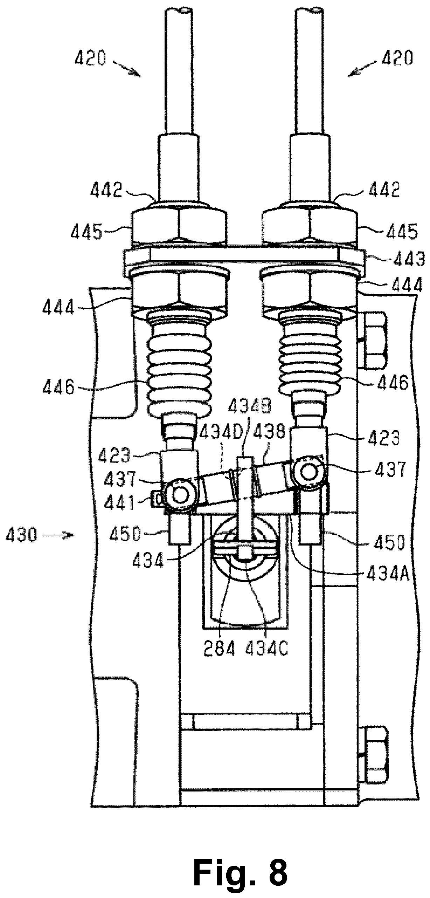

As shown in Fig. 8, when the operation member 410 of one cable member 420 (situated on the right side in the example shown in Fig. 8) of the manual brake release device 400 is pulled, the connecting member 423 connected to this cable member 420 is separated in the upward direction in the Fig. 8 from the contact portion.

On the other hand, since the position of the other cable member 420 (situated on the left side in the example shown in Fig. 8) of the manual brake release device 400 is unchanged, the connecting member 423 connected to this cable member 420 remains in contact with the contact portion 450. As a result, the balance bar 438 coupling the two connecting members 423 swings with the pin 437 of the connecting member 423 that contacts the contact portion 450 as the pivot.

At this time, since the connecting member 423 is inclined with respect to the horizontal direction, the hole edge of the through hole 434D of the lever member 434 is engaged with the side surface of the connecting member 423 from above and below. As a result, in the lever member 434, the through hole 434D that serves as the effort portion moves as the connecting member 423 swings. In the lever member 434, the second extending portion 434C that is the load portion is rotated about the shaft portion 434A, which is the fulcrum portion, in the direction where the second extending portion 434C moves away from the cylinder body 210. The rotational force of the lever member 434 is then transmitted from the second extending portion 434C to the latch member 281 via the ring member 284. Consequently, the first end portion of the latch member 281 coupled to the ring member 284 is pulled toward the outside of the cylinder body 210, whereby the braking force of the spring brake mechanism 240 is released.

As described above, the second embodiment has the following advantageous effects in addition to the advantages (1), (2) and (4) of the first embodiment. (5) When the cable member 420 is operated, the balance bar 438 rotates at the shaft portion 434A that serves as the fulcrum portion and the second extending portion 434C that serves as the load portion is driven.

(6) When the operation member 410 of one cable member 420 of the manual brake release device 400 is pulled, the balance bar 438 swings with the pin 437 of the connecting member 423 connected to the other cable member 420 of the manual brake release device 400 as the pivot. Then, the lever member 434 rotates as the balance bar 438 engages with the hole edge of the through hole 434D of the lever member 434. More specifically, since the displacement of the through hole 434D of the lever member 434 is about half of the displacement of the connecting member 423, the force necessary to operate the manual brake release device 400 can be reduced to half.

### Third Embodiment

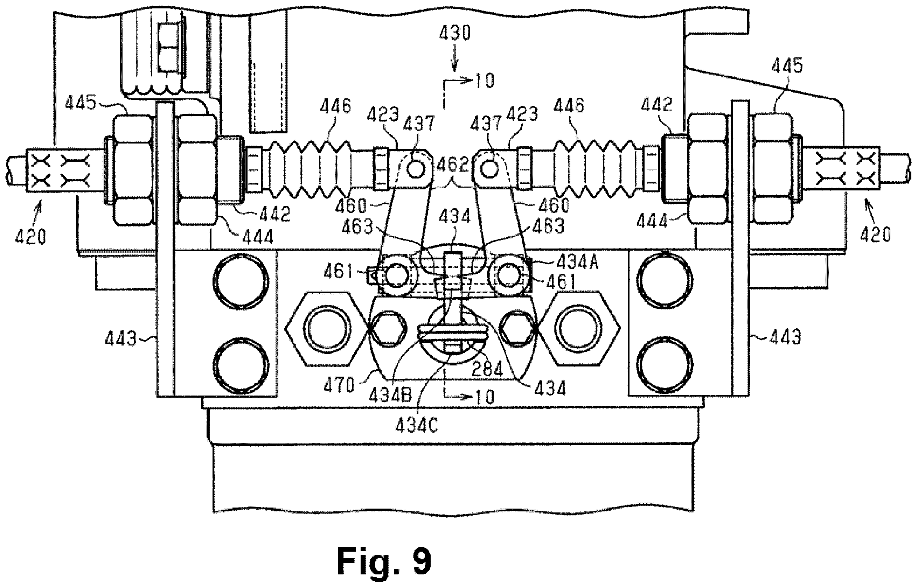

With reference to Figs. 9 to 12, a third embodiment of the brake device will be now described. The third embodiment has the connecting section of the manual brake release device whose configuration is different from the first embodiment. In the following description, the configuration different from the first embodiment will be mainly described, and the description of the same or similar components as the first embodiment will be omitted.

As shown in Fig. 9, the two cable members 420 of the manual brake release device 400 extend such that they face each other in the horizontal direction, and a transmission member 460 that has a substantially L shape is rotatably coupled to the connecting member 423 fixed to the inner cable 422 of each cable member 420 through the pin 437. A rotation shaft 461 supported by the cylinder body 210 is provided at a corner of the L-shape of each transmission member 460. A first end portion 462 of the L-shape of the transmission member 460 is coupled to the connecting member 423. A second end portion 463, which is the end opposite to the first end portion 462 to which the connecting member 423 of the transmission member 460 is coupled, contacts a contact portion 470 formed in the cylinder body 210.

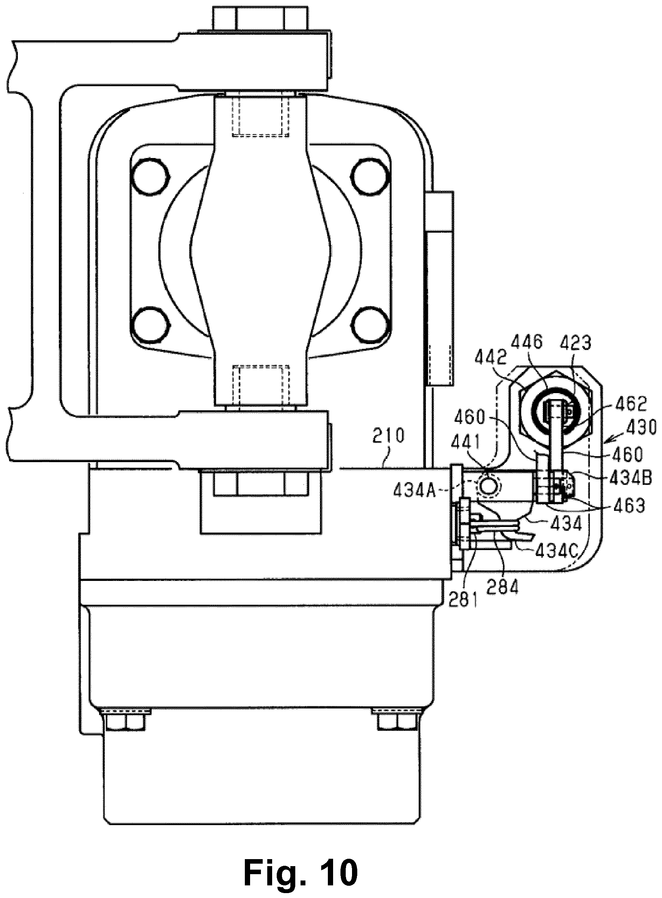

As shown in Fig. 10, the second end portion 463 of each transmission member 460 is engaged with the first extending portion 434B of the lever member 434. The transmission members 460 are arranged in parallel in the extending direction of the first extending portion 434B of the lever member 434, and engage with the corresponding first extending portions 434B at different positions.

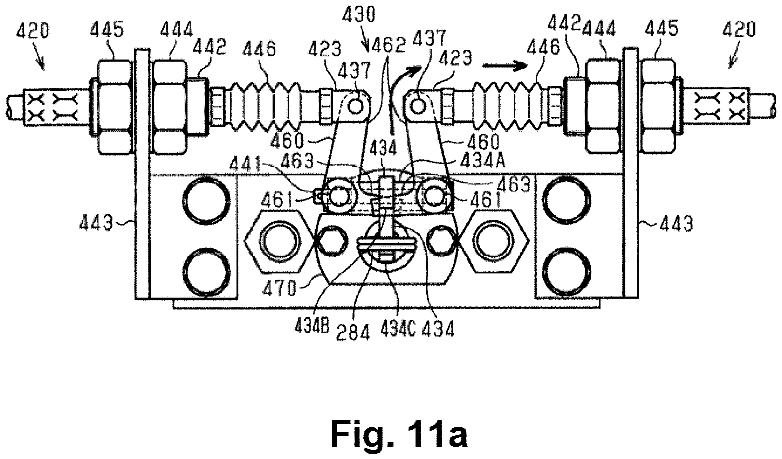

As shown in Fig. 11a, when one operation member 410 (situated on the right side in Fig. 11a) of the manual brake release device 400 is pulled, the connecting member 423 of the cable member 420 is also moved in the horizontal direction. The end portion of the transmission member 460 coupled to the connecting member 423 then moves in the horizontal direction and thereby the transmission member 460 pivots clockwise about the rotation shaft 461. In the case of the left cable member 420, the transmission member 460 pivots counterclockwise.

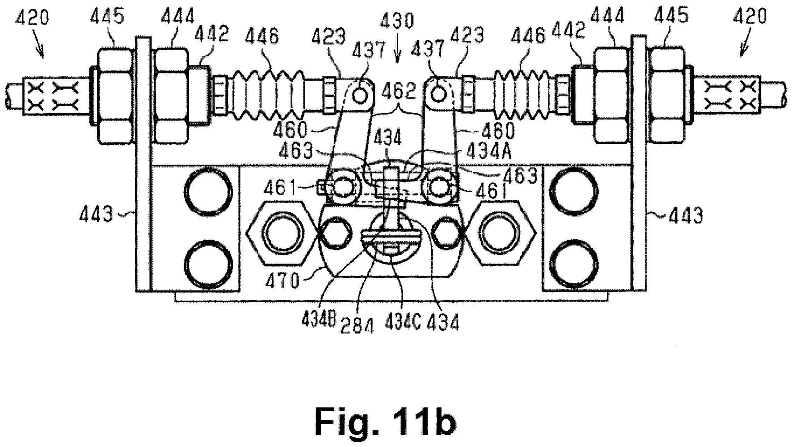

As a result, as shown in Fig. 11b, the second end portion 463 of the transmission member 460 rotates upward with the rotation shaft 461 as the fulcrum. Then, the transmission member 460 lifts up the first extending portion 434B of the lever member 434 from underneath.

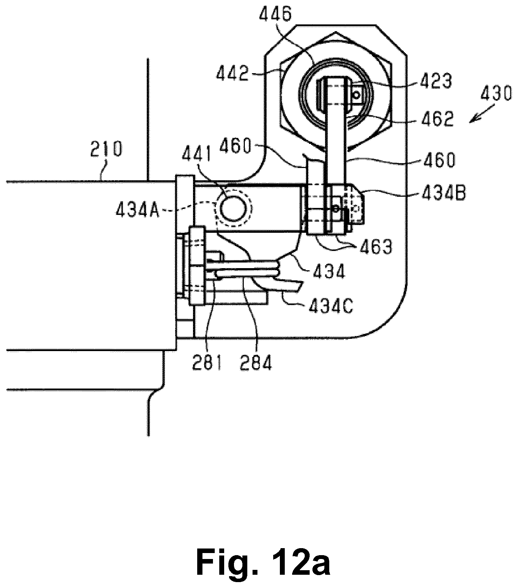

At this time, as shown in Fig. 12a, the first extending portion 434B of the lever member 434 is disposed along the horizontal direction when the operation member 410 is not pulled. The positional relationship between the displacement direction of the connecting member 423 of the cable member 420 and the displacement direction of the latch member 281 is skew. Therefore it is possible to install the manual brake release device 400 even when the latch member 281 and the second end of the cable member 420 are arranged in a skew positional relationship.

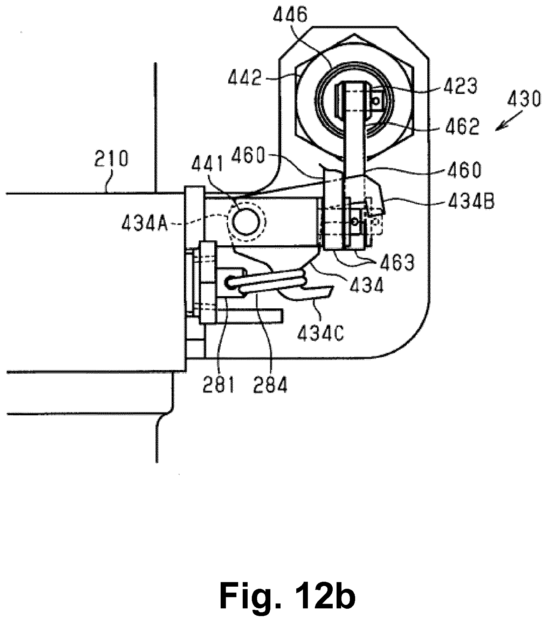

Whereas when the transmission member 460 rotates the second end 463 upward with the rotation shaft 461 as the fulcrum as shown in Fig. 12b, the lever member 434 is lifted up with the rotation shaft 441 as the fulcrum such that the first extending portion 434B is inclined with respect to the horizontal direction. In the lever member 434, the second extending portion 434C that is the load portion is rotated about the rotation shaft 441, which is the fulcrum portion, in the direction where the second extending portion 434C moves away from the cylinder body 210. The rotational force of the lever member 434 is then transmitted from the second extending portion 434C to the latch member 281 via the ring member 284. Consequently, the first end portion of the latch member 281 coupled to the ring member 284 is pulled toward the outside of the cylinder body 210, whereby the braking force of the spring brake mechanism 240 is released.

As described above, the third embodiment has the following advantageous effects in addition to the advantages (1), (2) and (4) of the first embodiment. (7) In order to transmit the displacement of the transmission member 460 provided in each cable member 420 to the lever member 434 connected to the latch member 281, the arrangement direction of the transmission member 460 with respect to the lever member 434 can be changed, which increases the degree of freedom of the installation position of the cable members 420.

### Fourth Embodiment

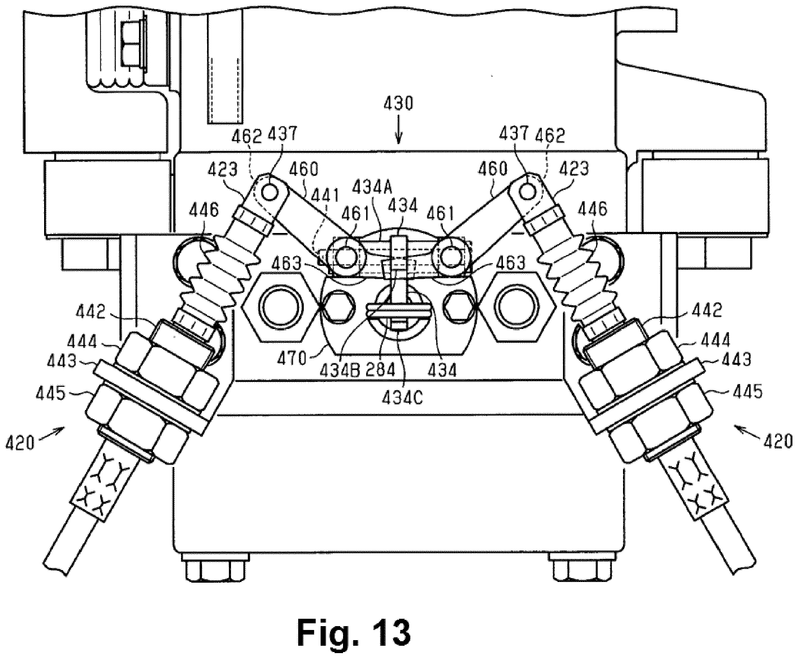

With reference to Figs. 13 to 14, a fourth embodiment of the brake device will be now described. The fourth embodiment is different from the third embodiment in that the cable members 420 are arranged differently in the manual brake release device. In the following description, the configuration different from the third embodiment will be mainly described, and the description of the same or similar components as the third embodiment will be omitted.

As shown in Fig. 13, the two cable members 420 of the manual brake release device 400 extend obliquely from below, and an open L-shaped transmission member 460 is provided pivotally about the rotation shaft 461 on the connecting member 423 fixed to each cable member 420. Each transmission member 460 is pivotable about the rotation shaft 461 supported by the cylinder body 210 at the corner of the transmission member 460. The first end portion 462 of the transmission member 460 is coupled to the connecting member 423. The second end portion 463, which is the end opposite to the first end portion 462 to which the connecting member 423 of the transmission member 460 is coupled, contacts the contact portion 470 formed on the cylinder body 210. The displacement direction of the connecting member 423 of the cable member 420 and the displacement direction of the latch member 281 are in a skew positional relationship, and the connecting member 423 of the cable member 420 is moved obliquely upward and downward. Therefore the manual brake release device 400 can be installed even when the latch member 281 and the cable member 420 are arranged in the skew positional relationship and the connecting member 423 is moved obliquely upward and downward.

The second end portion 463 of each transmission member 460 is engaged with the first extending portion 434B of the lever member 434. The transmission members 460 are arranged in parallel in the extending direction of the first extending portion 434B of the lever member 434, and engage with the corresponding first extending portions 434B at different positions.

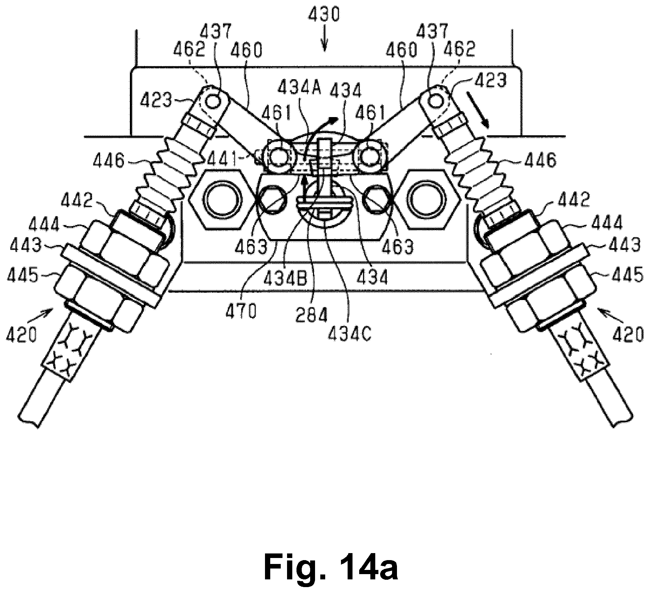

As shown in Fig. 14a, when one operation member 410 (situated on the right side in Fig. 14a) of the manual brake release device 400 is pulled, the connecting member 423 of the cable member 420 is also moved obliquely downward. The end portion of the transmission member 460 coupled to the connecting member 423 then moves obliquely downward in Fig. 14a and thereby the transmission member 460 pivots clockwise about the rotation shaft 461. In the case of the left cable member 420, the transmission member 460 pivots counterclockwise.

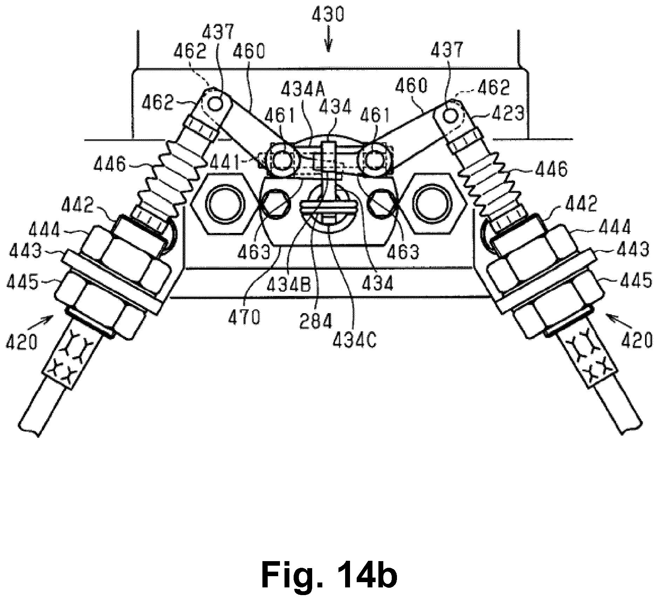

As a result, as shown in Fig. 14b, the second end portion 463 of the transmission member 460 pivots upward in Fig. 14b with the rotation shaft 461 as the fulcrum. Then, the transmission member 460 lifts up the first extending portion 434B of the lever member 434 from underneath.

In the lever member 434, the second extending portion 434C that is the load is rotated about the shaft portion 434A that is the fulcrum and attached around the rotation shaft 441, in the direction where the second extending portion 434C moves away from the cylinder body 210. The rotational force of the lever member 434 is then transmitted to the latch member 281 coupled to the ring member 284. Consequently, the first end portion of the latch member 281 coupled to the ring member 284 is pulled toward the outside of the cylinder body 210, whereby the braking force of the spring brake mechanism 240 is released.

As described above, the fourth embodiment has the following advantageous effects in addition to the advantages (1), (2) and (4) of the first embodiment. (8) In order to transmit the displacement of the transmission member 460 provided in each cable member 420 to the lever member 434 connected to the latch member 281, the arrangement direction of the transmission member 460 with respect to the lever member 434 can be changed, which increases the degree of freedom of the installation position of the cable members 420.

### Fifth Embodiment

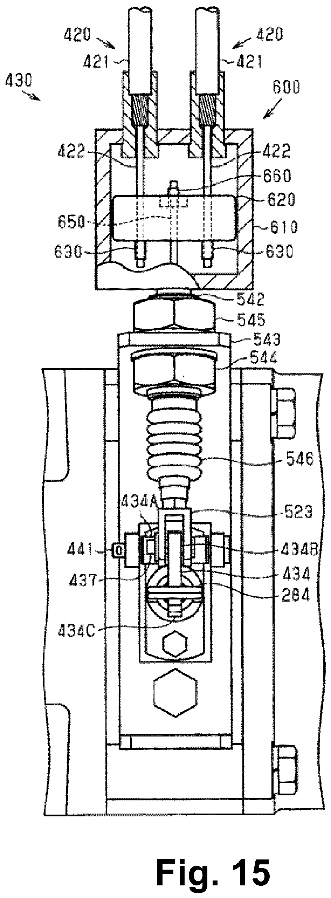

With reference to Figs. 15 to 16, a fifth embodiment of the brake device will be now described. The fifth embodiment has the connecting section between the cable member and the connecting member in the manual brake release device, whose configuration is different from the first embodiment. In the following description, the configuration different from the first embodiment will be mainly described, and the description of the same or similar components as the first embodiment will be omitted.

As shown in Fig. 15, a relay mechanism 600 is provided at the second ends of the two cable members 420 of the manual brake release device 400. The two cable members 420 are coupled to one end of the relay mechanism 600, and a single connection cable 650 is coupled to the other end of the relay mechanism 600. The connection cable 650 has the same configuration as the second end of the cable member 420 in the first to fourth embodiments, and the end opposite to the end connected to the lever member 434 is inserted into a casing 610 of the relay mechanism 600. That is, the relay mechanism 600 relays the two cable members 420 to the single connection cable 650. Between the relay mechanism 600 and the latch member 281, only one set of a second attachment member 542, a connection-side bracket 543, a nut 544, a nut 545, and a second extendable portion 546 is provided. The connection-side bracket 543 is fixed to the cylinder body 210. Further, the portion from the relay mechanism 600 to the lever member 434 serves as the connecting section.

The casing 610 of the relay mechanism 600 is fixed to the second attachment member 542. A movable member 620 is accommodated in the casing 610 of the relay mechanism 600. The second end portions of the inner cables 422 of the cable members 420 penetrate the movable member 620 in the vertical direction in Fig. 15. A crimp stopper 630 is fixed to a tip end of the second end portion of the inner cable 422 of each cable member 420 protruding from the lower end of the movable member 620. The movable member 620 moves in the vertical direction in Fig. 15 together with the inner cable 422 since the crimp stopper 630 contacts the movable member 620. Further, the connection cable 650 is inserted through the central portion of the movable member 620. A crimp stopper 660 is attached to a portion of the first end portion of the connection cable 650 protruding from the upper end of the movable member 620. The crimp stopper 660 is fixed to the movable member 620. Therefore, the connection cable 650 and the movable member 620 move together in the vertical direction in Fig. 15.

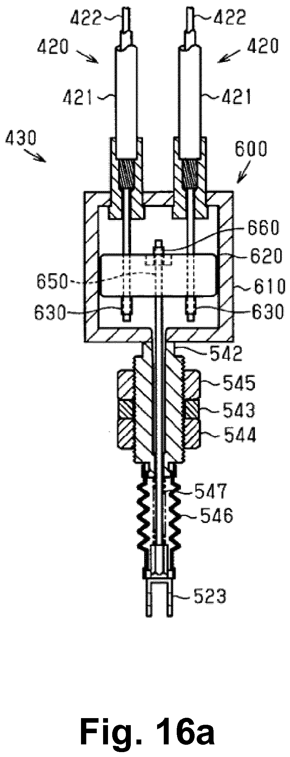

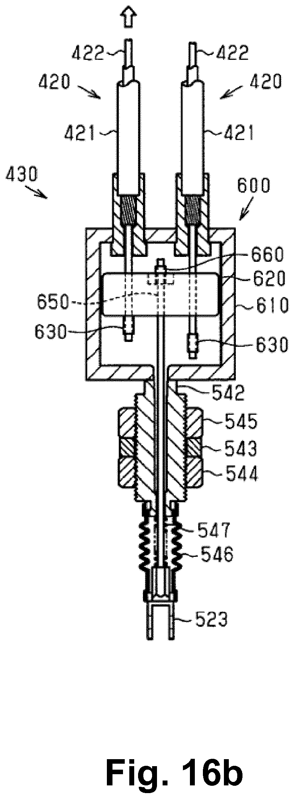

As shown in Fig. 16b, a U-shaped connecting member 523 is fixed to a second end of the connection cable 650. The connecting member 523 is connected to the lever member 434. A biasing spring 547 is attached around the connection cable 650 between the second attachment member 542 and the connecting member 523. The biasing spring is covered by a bellows-shaped second extendable portion 546. The biasing spring 547 biases the second attachment member 542 and the connecting member 523 in a direction in which they are separated from each other and thereby the second extendable portion 546 extends. When the operation member 410 is pulled and the movable member is moved, the amount of protrusion of the connection cable 650 on the second end side is decreased, which contracts the second extendable portion 546. Whereas when the operation member 410 is not pulled anymore, the amount of protrusion of the connection cable 650 on the second end side is increased so that the second extendable portion 546 extends.

When one operation member 410 (situated on the left side in Fig. 16b) of the manual brake release device 400 is pulled as shown in Fig. 16b, the second end portion of the pulled cable member 420 is moved upward in Fig. 16b along with the movable member 620. At this time, the second end portion of the other cable member 420 does not move, and the movable member 620 moves while the inner cable 422 of the other cable portion 420 is inserted therethough. As a result, the connection cable 650 is moved upward in Fig. 16b against the biasing force of the biasing spring 547 as the movable member 620 moves, and accordingly the connecting member 523 fixed to the second end of the connection cable 650 is moved upward in Fig. 16b.

Thereafter, as shown in Fig. 15, the lever member 434 is pulled upward in Fig. 15 as the connecting member 523 is moved upward in Fig. 15. In the lever member 434, the second extending portion 434C that is the load is rotated about the shaft portion 434A that is the fulcrum and attached around the rotation shaft 441, such that the second extending portion 434C moves away from the cylinder body 210. The rotational force of the lever member 434 is then transmitted to the latch member 281 via the ring member 284. Consequently, the first end portion of the latch member 281 coupled to the ring member 284 is pulled toward the outside of the cylinder body 210, whereby the braking force of the spring brake mechanism 240 is released.

As described above, the fifth embodiment has the following advantageous effects in addition to the advantages (1), (2) and (4) of the first embodiment. (9) The cable members 420 are coupled to the single connection cable 650 by the relay mechanism 600. Therefore, when the cable members 420 are attached to the railway vehicle 10, it is possible to attach the cable members 420 by coupling them to the relay mechanism 600 without changing the configuration of the connection cable 650 and the lever member 434.

### Sixth Embodiment

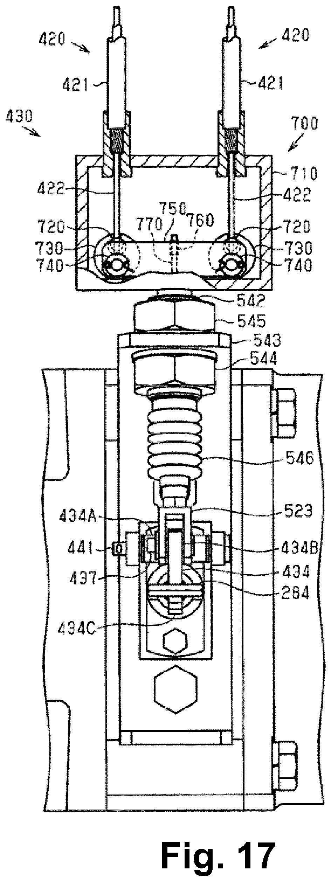

With reference to Figs. 17 to 18, a sixth embodiment of the brake device will be now described. The sixth embodiment has the relay mechanism in the manual brake release device whose configuration is different from the fifth embodiment. In the following description, the configuration different from the fifth embodiment will be mainly described, and the description of the same or similar components as the fifth embodiment will be omitted.

As shown in Fig. 17, a relay mechanism 700 is provided at the second ends of the two cable members 420 of the manual brake release device 400. The two cable members 420 are coupled to one end of the relay mechanism 700, and a single connection cable 770 is coupled to the other end of the relay mechanism 700. The connection cable 770 has the same configuration as the second end of the cable member 420 in the first to fourth embodiments, and the end opposite to the end connected to the lever member 434 is inserted into a casing 710 of the relay mechanism 700. That is, the relay mechanism 700 relays the two cable members 420 to the single connection cable 770. Between the relay mechanism 700 and the latch member 281, only one set of a second attachment member 542, a connection-side bracket 543, a nut 544, a nut 545, and a second extendable portion 546 is provided. The connection-side bracket 543 is fixed to the cylinder body 210. Further, the portion from the relay mechanism 700 to the lever member 434 serves as the connecting section.

The casing 710 of the relay mechanism 700 is fixed to the second attachment member 542. A connecting plate 750 is accommodated in the casing 710 of the relay mechanism 700. The connecting plate 750 is coupled with the second end portions of the inner cables 422 of the cable members 420 from the above in Fig. 17. Rollers 730 are provided at both ends of the connecting plate 750. The rollers 730 are each coupled rotatably to the connecting plate 750 via a connecting pin 740. A cable pin 720 is fixed to the tip of the second end portion of the cable member 420. Each roller 730 is coupled to a corresponding cable pin 720. Thus, the two end portions of the connecting plate 750 and the cable members 420 move together in the vertical direction in Fig. 17. Further, a connection cable 770 is inserted through the central portion of the connecting plate 750. A crimp stopper 760 is attached to a portion of the first end portion of the connection cable 770 protruding from the upper end of the connecting plate 750. The crimp stopper 760 is fixed to the connecting plate 750. Therefore, the connection cable 770 and the connecting plate 750 move together in the vertical direction in Fig. 17.

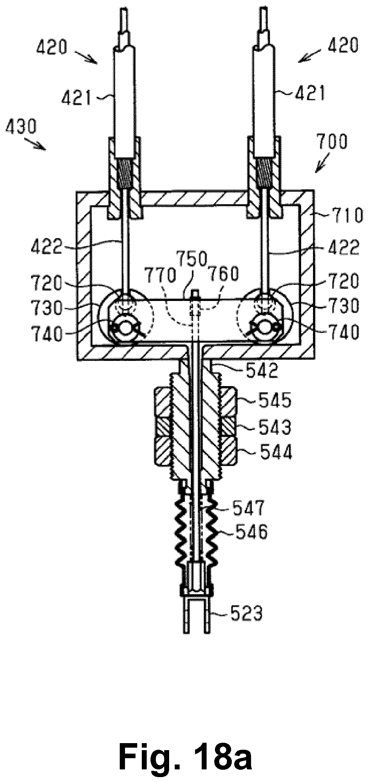

As shown in Fig. 18a, the U-shaped connecting member 523 is fixed to the second end of the connection cable 770. The connecting member 523 is connected to the lever member 434. A biasing spring 547 is attached around the connection cable 770 between the second attachment member 542 and the connecting member 523. The biasing spring is covered by a bellows-shaped second extendable portion 546. The biasing spring 547 biases the second attachment member 542 and the connecting member 523 in a direction in which they are separated from each other and thereby the second extendable portion 546 extends. When the operation member 410 is pulled and the connecting plate 750 is moved, the amount of protrusion of the connection cable 770 on the second end side is decreased, which contracts the second extendable portion 546. Whereas when the operation member 410 is not pulled anymore, the amount of protrusion of the connection cable 770 on the second end side is increased so that the second extendable portion 546 extends.

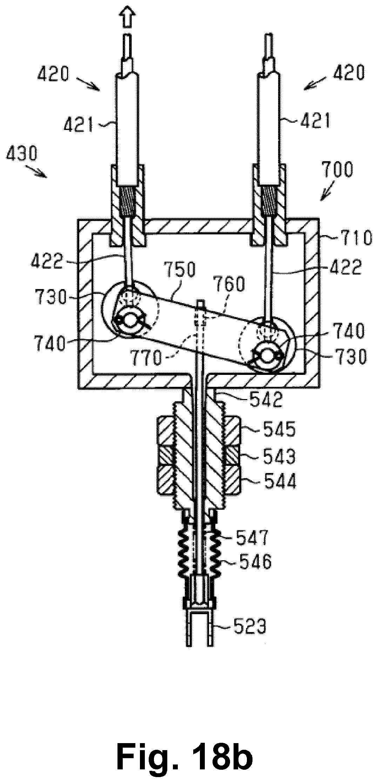

When one operation member 410 (situated on the left side in Fig. 18b) of the manual brake release device 400 is pulled as shown in Fig. 18b, the roller coupled to the corresponding cable member 420 is separated from the bottom of the casing 710 to the upward direction in the Fig. 18b. At this time, since the position of the other cable member 420 (situated on the right side in Fig. 18b) of the manual brake release device 400 is unchanged, the roller 730 coupled to this cable member 420 remains in contact with the bottom of the casing 710. As a result, the connecting plate 750 connecting the two rollers 730 swings with the roller 730 that contacts the bottom surface of the casing 710 as the pivot.

The connection cable 770 is then moved upward in Fig. 18b against the biasing force of the biasing spring 547 as the coupling portion between the connecting plate 750 and the connection cable 770 moves upward in Fig. 18b, and accordingly the connecting member 523 fixed to the second end of the connection cable 770 is moved upward in Fig. 18b.

Thereafter, as shown in Fig. 17, the lever member 434 is pulled upward in Fig. 15 as the connecting member 523 is moved upward in Fig. 15. In the lever member 434, the second extending portion 434C that is the load is rotated about the shaft portion 434A that is the fulcrum and attached around the rotation shaft 441, such that the second extending portion 434C moves away from the cylinder body 210. The rotational force of the lever member 434 is then transmitted to the latch member 281 via the ring member 284. Consequently, the first end portion of the latch member 281 coupled to the ring member 284 is pulled toward the outside of the cylinder body 210, whereby the braking force of the spring brake mechanism 240 is released.

As described above, the sixth embodiment has the following advantageous effects in addition to the advantages (1), (2), (4) and (9) of the fifth embodiment.

(10) When the operation member 410 of one cable member 420 of the manual brake release device 400 is pulled, the connecting plate 750 swings with the roller 730 connected to the other cable member 420 of the manual brake release device 400 as the pivot. The connection cable 770 inserted through the central portion of the connecting plate 750 is moved upward in Fig. 17. More specifically, since the displacement of the connection cable 770 is about half of the displacement of the inner cable 422, the force necessary to operate the manual brake release device 400 can be reduced to half.

### Other Embodiments

The foregoing embodiments can also be modified as described below. In each of the above embodiments, although the latch member 281 and the lever member 434 are coupled via the ring member 284, but the latch member 281 and the lever member 434 may be directly connected to each other.

In the fifth and sixth embodiments, the casings 610 and 710 of the relay mechanisms 600 and 700 are fixed to the second attachment member 442. Alternatively, the casings 610 and 710 of the relay mechanisms 600 and 700 may be each fixed to the connection-side bracket 443. Further, the casings 610 and 710 of the relay mechanisms 600 and 700 may be directly fixed to the cylinder body 210.

In each of the above embodiments, the manual brake release device 400 is disposed at a position closer to the wheel 12 than the brake cylinder device 200. Alternatively, the manual brake release device 400 may be disposed at a position opposite to the wheel 12 when viewed from the brake cylinder device 200. Alternatively, the manual brake release device 400 may be disposed at any position in/on the brake cylinder device 200.

In each of the above embodiments, compressed air is used as the pressure fluid for the hydrodynamic brake mechanism 230 and the spring brake mechanism 240. Alternatively, hydraulic oil may be used as the pressure fluid.

The above embodiments are applied to the brake device that generates a braking force by contacting the tread 12a of the wheel 12. However the embodiments may also be applied to other brake devices such as a caliper brake or a rail brake in which a brake friction member is pressed against a pressed member.

In each of the above embodiments, the operation member 410 of the manual brake release device 400 is manually operated. Alternatively, an operating device that operates the operation member 410 may be connected to the operation member 410 of the manual brake release device 400 and the operation member 410 of the manual brake release device 400 may be operated by the operating device. When the operating device has a wired or wireless communication function, it is possible to operate the manual brake release device 400 remotely.

In each of the above embodiments, the manual brake release device 400 has two or more cable members 420. Alternatively, any members such as bars may be used provided that the members are capable of operating the latch member 281 of the lock mechanism 280 instead of the cable members 420.

### LIST OF REFERENCE NUMBERS

- 10: railway vehicle
- 11: axle
- 12: wheel as pressed member
- 100: brake device
- 240: spring brake mechanism
- 281: latch member
- 284: ring member
- 302: brake shoe as brake friction member
- 400: manual brake release device as release unit
- 410: operation member
- 411: grip
- 412: first attachment member
- 413: operation-side bracket
- 414, 415: nut
- 416: first extendable portion
- 420: cable member
- 421: outer cable
- 422: Inner cable
- 423: connecting member
- 430: connecting section
- 434: lever member
- 434A: shaft portion as fulcrum portion
- 434B: first extending portion as effort portion
- 434C: second extending portion as load portion
- 434D: through hole
- 438: balance bar
- 441: rotation shaft
- 442: second attachment member
- 443: contact-side bracket
- 444, 445: nut
- 446: second extendable portion
- 447: biasing spring
- 450: contact portion
- 460: transmission member
- 461: rotation shaft
- 462: first end portion
- 463: second end portion
- 470: contact portion
- 523: connecting member
- 542: second attachment member
- 543: connection-side bracket
- 544: nut
- 545: nut
- 546: second extendable portion
- 547: biasing spring
- 600: relay mechanism
- 610: casing
- 620: movable member
- 630: crimp stopper
- 650: connection cable
- 660: crimp stopper
- 700: relay mechanism
- 710: casing
- 720: cable pin
- 730: roller
- 740: connecting pin
- 750: connecting plate
- 760: crimp stopper
- 770: connection cable

## Claims

1. A brake device (100) for applying a braking force to a wheel being provided at an end of an axle (11) of a railway vehicle (10), the brake device (100) comprising:
a spring brake mechanism (240) generating a braking force by pressing a brake friction member (302) against a pressed member (12) by a spring force, the pressed member (12) being the wheel (12); and
at least one release unit (400) releasing the braking force of the spring brake mechanism (240) by preventing transmission of the spring force of the spring brake mechanism (240) to the brake friction member (302),
**characterized in that** two or more release units (400) are provided for the spring brake mechanism (240).

2. The brake device (100) according to claim 1, wherein the two or more release units (400) each include one cable member (420).

3. The brake device (100) according to claim 2, wherein
each release unit (400) includes a lever member (434) disposed between the cable member (420) of the release unit (400) and the spring brake mechanism (240), and
the lever member (434) of the release unit (400) includes a fulcrum portion (434A) by which the lever member (434) supported pivotably about a rotation shaft (441), an effort portion (434B) coupled to the cable member (420), and a load portion (434C) coupled to the spring brake mechanism (240).

4. The brake device (100) according to claim 3, wherein
the two or more release units (400) are two release units, each including one cable member (420),
the lever member (434) is a rod shaped member having a point of load, and
two ends of the rod shaped member are coupled to the two cable members (420) of the two release units, respectively.

5. The brake device (100) according to claim 3, wherein, in each release unit (400), a distance between the fulcrum portion (434A) and the effort portion (434B) is longer than a distance between the fulcrum portion (434A) and the load portion (434C).

6. A railway vehicle(10), comprising;
the brake device (100) according to any one of claims 1 to 5,
wherein a
release unit (400) is provided on each side of the railway vehicle (10).

7. A railway vehicle(10), comprising;
the brake device (100) according to any one of claims 2 to 5,
wherein the cable member (420) of each release unit (400) is disposed over a bogie of the railway vehicle (10).

## Patentansprüche

1. Eine Bremsvorrichtung (100) zum Aufbringen einer Bremskraft auf ein Rad, das an einem Ende einer Achse (11) eines Schienenfahrzeugs (10) vorgesehen ist, wobei die Bremsvorrichtung (100) umfasst;
einen Federbremsmechanismus (240), der eine Bremskraft erzeugt, indem er ein Bremsreibungselement (302) durch eine Federkraft gegen ein gedrücktes Element (12) drückt, wobei das gedrückte Element (12) das Rad (12) ist; und
zumindest eine Löseeinheit (400), die die Bremskraft des Federbremsmechanismus (240) löst, indem sie die Übertragung der Federkraft des Federbremsmechanismus (240) auf das Bremsreibungselement (302) verhindert,
**dadurch gekennzeichnet, dass** zwei oder mehr Löseeinheiten (400) für den Federbremsmechanismus (240) vorgesehen sind.

2. Die Bremsvorrichtung (100) nach Anspruch 1, wobei die zwei oder mehr Löseeinheiten (400) jeweils ein Kabelelement (420) umfassen.

3. Die Bremsvorrichtung (100) nach Anspruch 2, wobei
jede Löseeinheit (400) ein Hebelelement (434) enthält, das zwischen dem Kabelelement (420) der Löseeinheit (400) und dem Federbremsmechanismus (240) angeordnet ist, und
das Hebelelement (434) der Löseeinheit (400) einen Drehpunktabschnitt (434A), durch den das Hebelelement (434) schwenkbar um eine Drehwelle (441) gelagert ist, einen mit dem Kabelelement (420) gekoppelten Aufwendungsabschnitt (434B) und einen mit dem Federbremsmechanismus (240) gekoppelten Lastabschnitt (434C) enthält.

4. Die Bremsvorrichtung (100) nach Anspruch 3, wobei
die zwei oder mehr Auslöseeinheiten (400) zwei Löseeinheiten sind, die jeweils ein Kabelelement (420) enthalten,
das Hebelelement (434) ein stangenförmiges Element ist, das einen Lastpunkt aufweist, und
zwei Enden des stangenförmigen Elements jeweils mit den zwei Kabelelementen (420) der zwei Löseeinheiten gekoppelt sind.

5. Die Bremsvorrichtung (100) nach Anspruch 3, wobei in jeder Löseeinheit (400) ein Abstand zwischen dem Drehpunktabschnitt (434A) und dem Aufwendungsabschnitt (434B) länger ist als ein Abstand zwischen dem Drehpunktabschnitt (434A) und dem Lastabschnitt (434C).

6. Ein Schienenfahrzeug (10), umfassend;
die Bremsvorrichtung (100) nach einem der Ansprüche 1 bis 5,
wobei eine Löseeinheit (400) auf jeder Seite des Schienenfahrzeugs (10) vorgesehen ist.

7. Ein Schienenfahrzeug (10), umfassend;
die Bremsvorrichtung (100) nach einem der Ansprüche 2 bis 5,
wobei das Kabelelement (420) jeder Löseeinheit (400) über einem Drehgestell des Schienenfahrzeugs (10) angeordnet ist.

## Revendications

1. Dispositif de frein (100) pour appliquer une force de freinage à une roue disposée à une extrémité d'un essieu (11) d'un véhicule ferroviaire (10), le dispositif de frein (100) comprenant :
un mécanisme de frein à ressort (240) générant une force de freinage en pressant un élément de friction de frein (302) contre un élément pressé (12) par une force de ressort, l'élément pressé (12) étant la roue (12) ; et
au moins une unité de libération (400) libérant la force de freinage du mécanisme de frein à ressort (240) en empêchant une transmission de la force de ressort du mécanisme de frein à ressort (240) à l'élément de friction de frein (302),
**caractérisé en ce que** deux unités de libération (400) ou plus sont fournies pour le mécanisme de frein à ressort (240) .

2. Le dispositif de frein (100) selon la revendication 1, dans lequel les deux unités de libération (400) ou plus incluent chacune un élément de câble (420).

3. Le dispositif de frein (100) selon la revendication 2, dans lequel
chaque unité de libération (400) inclut un élément de levier (434) disposé entre l'élément de câble (420) de l'unité de libération (400) et le mécanisme de frein à ressort (240), et
l'élément de levier (434) de l'unité de libération (400) inclut une partie de pivot (434A) par laquelle l'élément de levier (434) est soutenu en pivotement autour d'un arbre de rotation (441), une partie d'effort (434B) couplée à l'élément de câble (420) et une partie de charge (434C) couplée au mécanisme de frein à ressort (240) .

4. Le dispositif de frein (100) selon la revendication 3, dans lequel
les deux unités de libération (400) ou plus sont deux unités de libération, chacune incluant un élément de câble (420),
l'élément de levier (434) est un élément en forme de tige présentant un point de charge, et
deux extrémités de l'élément en forme de tige sont couplées aux deux éléments de câble (420) des deux unités de libération, respectivement.

5. Le dispositif de frein (100) selon la revendication 3, dans lequel, dans chaque unité de libération (400), une distance entre la partie de pivot (434A) et la partie d'effort (434B) est plus longue qu'une distance entre la partie de pivot (434A) et la partie de charge (434C).

6. Véhicule ferroviaire (10), comprenant :
le dispositif de frein (100) selon l'une quelconque des revendications 1 à 5,
dans lequel
une unité de libération (400) est disposée sur chaque côté du véhicule ferroviaire (10).

7. Véhicule ferroviaire (10), comprenant ;
le dispositif de frein (100) selon l'une quelconque des revendications 2 à 5,
dans lequel l'élément de câble (420) de chaque unité de libération (400) est disposé par-dessus un bogie du véhicule ferroviaire (10).
